Europäisches Patentamt

European Patent Office

Office européen des brevets

(19)

(11) Publication number: **0 441 332 A2**

# (12) EUROPEAN PATENT APPLICATION

(21) Application number: **91101558.4**

(22) Date of filing: **06.02.91**

(51) Int. Cl.⁵: **H04N 5/44, H04N 5/60**

(30) Priority: **08.02.90 IT 6709590**

(43) Date of publication of application:
**14.08.91 Bulletin 91/33**

(84) Designated Contracting States:
**BE DE ES FR**

(71) Applicant: **SOCIETA ITALIANA PER LO
SVILUPPO DELL'ELETTRONICA S.I.SV.EL
S.P.A.**
**Via Castagnole, 59**
**I-10060 None (TO)(IT)**

(72) Inventor: **Dini, Roberto**
**Via Malta, 9**
**I-10098 Rivoli (TO)(IT)**

(54) Improved television signal receiver.

(57) The present invention refers to an improved television signal receiver, comprising means for receiving a television channel, obtaining the relative video signal, destined to be viewed by the respective image reproducing apparatus, and obtain the relative sound signal, destined to be reproduced by means of the respective sound apparatus; the main characterising principles of the invention consist in the fact that the receiver comprises additional means for obtaining contemporaneously also the sound signal relative to a different second television channel.

FIG. 1

EP 0 441 332 A2

## IMPROVED TELEVISION SIGNAL RECEIVER

The present invention refers to a television signal receiver, comprising means for receiving a television channel, obtaining the relative video signal, destined to be viewed by the respective image reproducing apparatus, and to obtain the relative sound signal, destined to be reproduced by means of the respective sound apparatus.

The classic television signal receivers comprise means for receiving a television channel, obtain the relative video signal, destined to be viewed by means of the respective image reproducing apparatus, and for obtaining the relative sound signal, destined to be reproduced by means of the respective sound apparatus.

It is also known television receivers that comprise additional means for obtaining contemporaneously the video signal relative to a different second television channel.

Generally, such receivers visualise said second video signal in a restricted narrow area of the screen reproducing the main image. Such receivers therefore allow the contemporary viewing of two images relative to different channels.

It is also known television signal receivers able to alternately receive one or another of two different audio signals associated to one television channel.

The object of the present invention is to indicate a television signal receiver more versatile than those known, able to satisfy more users contemporaneously.

To achieve this objective, the subject of the present invention is a television signal receiver, comprising means for receiving a television channel, obtaining the relative video signal, destined to be viewed by means of the respective image reproducing apparatus, and to obtain the relative sound signal, destined to be reproduced by means of the relative sound apparatus, characterised by the fact that it comprises additional means for obtaining contemporaneously also the sound signal relative to a different second television channel.

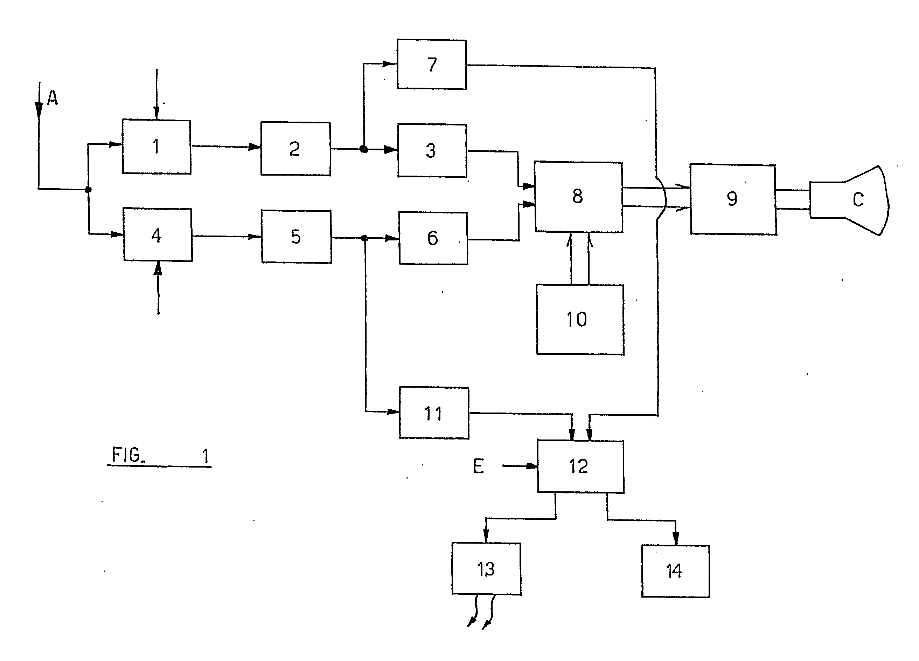

Further objects and advantages of the present invention will become clear from the detailed description which follows and from the attached drawings, which are supplied only as an explanatory and non limiting example, wherein:
the figure schematically represents the diagram of a television receiver according to the invention.

In the figure the reference letter A represents the aerial, connected to the receiver to pick up the available television signals.

Said aerial is connected to two conventional tuners referred to respectively with the reference numbers 1 and 4; said tuners are followed by two signal amplifiers of intermediate frequence, also conventional, referred to respectively with the numbers 2 and 5.

The amplifier 2 is connected at its exit to a video detector 3 and to a sound signal amplifying and detecting chain 7; the amplifier 5, itself, is connected at its exit to a video detector 6 and to a sound signal amplifying and detecting chain 11.

The two video detectors 3 and 6 are both connected to a memory circuit 8, which is itself connected to a processor 10. The memory circuit 8 is of the known type and is able to memorise and combine video signals relative to one or more images and, under control of the processor 10, comprising a microprocessing circuit of the known type, consequently it is possible to send to the next video amplifying circuit 9, a combined image containing for example a main image (corrisponding to the video signal coming from the chain 1, 2, 3) and a different second image of a reduced dimension placed in a corner of the latter (corrisponding to the video signal coming from the chain 4,5,6). Such combined image are then viewed by the reproducer of television images represented by the letter C, for example represented by a normal picture tube, or other known image display.

The two audio signals, coming from the circuits 7 and 11 reach an audio processing circuit, represented by the number 12; such circuit also receives an external command signal, represented in the figure by the letter E.

The circuit 12 is able to amplify the two audio signals and to send them to two exits, that may be exchanged between themselves.

The circuit 12 therefore pilots two independent sound reproduction devices; the first, represented by the number 14, is a conventional sound diffusion system comprising one or more loud speakers; the second, represented by the number 13, is a device able to transmit the sound signal by means of known rays (for example through a radio carrier modulated in FM, or through infra-red rays) to a second sound reproducing system, that may typically be an individual reproducing device (headphone or ear-piece, not represented).

In dependence of signal E received, the circuit 12 provides for example to commutate the sound signals in some typical situations:
- sends the main signal, coming from the chain 1,2,7, to the loud speaker 14 and the secondary signal, coming from the chain 4,5,11 to the individual device 13;
- sends the main signal, coming from the chain 1,2,7 to the loud speaker 14 and suppress the secondary signal;
- sends the secondary signal, coming from the chain 4,5,11 to the loud speaker 14, and suppress the main signal.

The first situation permits the sound of the secondary channel to be listened to through head-phones while the main signal is visualised on the screen, the sound of which is reproduced by the loud speakers; the second video signal may or may not be viewed on the screen, depending on the users wishes.

The second situation corresponds to the normal reception of a single audio signal (that of the main channel); the second channel may or may not be viewed also in this situation:

The third situations allows the secondary audio signals to be listened to by use of the loud speakers, while the screen shows only the main signal or both of the signals; that is when the sound of the main channel is not of great interest.

The command signal E must therefore be a three state signal, obtainable for example by the use of two keys: the first key for deciding whether the main sound reproducer 14 is sent to the first or the second sound signal; a second key to decide whether the other signal is to be abolished or sent to the secondary reproducer 13.

Naturally, to manage the video reproduction, the use of a suitable command system of the processor 8 must be foreseen; that is on deciding whether to visualise or not the secondary video signal The characteristics of the television signal receiver described become clear from the given description and the attached drawings.

From the given description it also becomes clear the advantages of the television signal receiver object of the present invention.

In particular the advantages consist of the fact that:
- it is possible to normally watch and listen to a television programme while an other person can contemporaneously listen to the audio of a second television programme which this person considers to be of greater intrest;
- it is also possible for two people to watch and listen to two different television programmes contemporaneously;
- it is possible for one or more people to watch the images of one programme and listen to the audio of a second programme.

It is clear that the television signal receiver described as an example is more versatile than those already known; it is also possible for numerous variations to be produced by a technician of the art, to the television signal receiver described as an example, how to effect several different audio visual combinations with regards to those described or obtaining the commutation E by the remote control unit without the direct intervention on the receiver, without departing from the novelty principles inherent to the present invention.

**Claims**

1. Television signal receiver, comprising means for receiving a television channel, obtaining the relative video signal, destined to be viewed by the respective image reproducing apparatus, and obtain the relative sound signal, destined to be reproduced by means of the respective sound apparatus, characterised by the fact that said receiver comprises additional means (4, 5, 11, 12, 13) for contemporaneously obtaining also the sound signal relative to a different second television channel.

2. Television signal receiver according to claim 1, characterised by the fact that said additional means comprises a device (13) able to transmit the sound signal by means of known waves to a second sound reproducing system.

3. Television signal receiver, according to claim 2, characterised by the fact that said second sound reproducing system comprises an individual reproducing device (head-phone or ear-piece).

4. Television signal receiver, according to claim 2, characterised by the fact that said device (13) is able to transmit by means of a radio carrier modulated in FM.

5. Television signal receiver according to claim 2, characterised by the fact that said device (13) is able to transmit by means of infra-red rays.

6. Television signal receiver according to claim 2, characterised by the fact that it comprises a sound signal processor (12), by the means of which it is possible to switch the sound signal relative to the first television channel to either the first reproduction system (14) or to the second reproduction system (13), the same is also so for the relative sound signal to the second television channel.

7. Television signal receiver according to claim 1, characterised by the fact that said additional means comprise a second tuner (4), a second amplifyer of intermediate frequence signals (5) and a second sound system amplifying and detecting chain.

8. Television signal receiver according to claim 1, characterised by the fact that it comprises further additional means (6, 8, 10) for contemporaneously obtaining also the video signal relative to said different second television channel and showing it on said image reproducing apparatus.

9. Television signal receiver according to claim 6, characterised by the fact that said processor (12) is commanded by an appropriate command signal (E).

10. Television signal receiver according to claim 9, characterised by the fact that said command signal (E) is generated by means of keys made available to the user of the receiver.

11. Television signal receiver according to claim 9, characterised by the fact that commutation signal (E) is generated by means of a remote control unit made available to the user of the receiver.

FIG. 1